# EUROPEAN PATENT APPLICATION

(11) **EP 2 860 949 A2**
(43) Date of publication of application: **15.04.2015**
(21) Application number: 13196973.5
(22) Date of filing: 12.12.2013
(51) Int. Cl.: H04M 1/60, H04W 8/00

(54) **Apparatus having bluetooth module and method for bluetooth communication thereof**

(30) Priority: 28.08.2013 KR 20130102183
(71) Applicant: HYUNDAI MOTOR COMPANY, Seoul 137-938 (KR)
(72) Inventor: Heo, Keun Hang, 449-020 Gyeonggi-do (KR); Lim, Ji Hyun, 440-819 Gyeonggi-do (KR); Lee, Man Ho, 137-767 Seoul (KR)
(74) Representative: Isarpatent

(57) **Abstract**

An apparatus having a Bluetooth module and a method for Bluetooth communication thereof are provided. The apparatus may be positioned in a vehicle. As such, the apparatus includes a Bluetooth module configured to perform Bluetooth communication with one or more devices configured to perform the Bluetooth communication. Also included is a processor configured to obtain received signal strength indications (RSSIs) of the devices when searched devices are products manufactured by the same manufacturer as that of the apparatus and perform pairing with a device having the largest RSSI among the obtained RSSIs to connect the Bluetooth communication.

## Description

### BACKGROUND

### Field of the invention

The present invention relates to an apparatus having a Bluetooth module and a method for Bluetooth communication thereof, and more particularly, to an apparatus having a Bluetooth module capable of searching for devices manufactured by the same manufacturer as that of the apparatus present in a vehicle and having a Bluetooth module therein and pairing using received signal strength indication (RSSI) values of the searched devices, and a method for Bluetooth communication thereof.

### Description of the Prior Art

Recently, in accordance with a significant increased in an interest in a technology using a low cost and low power wireless apparatuses or wireless links in the field of wireless communication, various technologies associated with the wireless communication have been developed and implemented. Bluetooth, for example, is a wireless communication scheme based on a short range radio technology. Bluetooth may be operated in an industrial scientific medical (ISM) frequency band of 2.4GHz and transmit audio and data at a maximum speed of 1Mbps within a radius distance of 10m. Since a Bluetooth module consumes a low amount of power, that amount of devices utilizing Bluetooth technology has significantly increased.

During Bluetooth communication a portable terminal, or the like, having a general Bluetooth module, performs for the following processes: search (Inquiry) of devices capable of performing Bluetooth communication, a response (Inquiry_res) from the devices, a remote name request (Remote Name Request) to the inquired devices, response (Remote Name Request_res) from the devices, a connection request (Page) to a specific device and response (Page_res) from the specific device, and pairing (Pairing) to the corresponding device and a response (Pairing_res) from the corresponding device are performed.

In order to perform the Bluetooth communication, several processes as described above must be performed. In addition, in order to perform responses through the inquiry of the devices and t the remote name request, there is a waiting time of several seconds and a response failure possibility could possibly occur. Further, in order to perform corresponding processes, an input of a user such as a personal identification number (PIN) code, or the like, for selecting and pairing specific devices are required.

### SUMMARY

Accordingly, the present invention has been made to solve the above-mentioned problems occurring in the prior art while advantages achieved by the prior art remain intact. One subject to be achieved by the present invention is to provide an apparatus having a Bluetooth module that decreases a waiting time during pairing with a specific device by Bluetooth communication, and a method for Bluetooth communication thereof.

Another subject to be achieved by the present invention is to provide an apparatus having a Bluetooth module capable of minimizing the amount of input of a user while being connected to a desired device by Bluetooth communication, and a method for Bluetooth communication thereof.

Still another subject to be achieved by the exemplary embodiment of the present invention is to provide an apparatus having a Bluetooth module capable of searching devices manufactured by the same manufacturer as that of the apparatus having a corresponding Bluetooth module and pairing with a device having a largest RSSI value based on received signal strength indication (RSSI) values of the searched devices, and a method for Bluetooth communication thereof.

In one aspect of the present invention, there is provided an apparatus positioned in a vehicle, including: a Bluetooth module configured to perform Bluetooth communication with one or more devices capable of performing the Bluetooth communication; and a processor configured to search for the one or more devices and obtain RSSIs of the devices. In particular, the processor searches for one or more devices that are products manufactured by the same manufacturer as that of the apparatus and pair a device of the one or more devices having a largest RSSI among the obtained RSSIs to connect the Bluetooth communication.

The processor may confirm whether or not the devices are the products manufactured by the same manufacturer as that of the apparatus by using organization unique identifiers (OUIs) of media access control (MAC) addresses of the devices. Upon confirming by the processor that devices are products manufactured by the same manufacture as that of the apparatus, the processor may add the devices that are the products manufactured by the same manufacturer as that of the apparatus to a list of devices manufactured by the same manufacturer, and storing the list of the devices manufactured by the same manufacturer on a storage device, such as a memory or hard drive.

For example, the above one or more devices capable of performing the Bluetooth communication may a head unit located in the vehicle or a telephone.

In another aspect of the present invention, there is provide a Bluetooth communication method including: searching, by an apparatus having a Bluetooth module, one or more devices configured to perform Bluetooth communication and located in a vehicle; confirming, by a processor, whether the devices are products manufactured by the same manufacturer as that of the apparatus; obtaining, by the processor, RSSIs of the devices; and pairing, by the processor, with a device having a largest RSSI among the obtained RSSIs to connect the Bluetooth communication.

In order to confirm whether the devices are products manufactured by the same manufacturer as that of the apparatus, the apparatus may determine whether the devices are products manufactured by the same manufacturer as that of the apparatus by using OUIs of MAC addresses. The Bluetooth communication method may further include, upon confirming of whether the devices are products manufactured by the same manufacturer as that of the apparatus, the devices that are the products manufactured by the same manufacturer as that of the apparatus are added to a list of devices manufactured by the same manufacturer and store the list of the devices manufactured by the same manufacturer.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram showing main components of an apparatus having a Bluetooth module according to an exemplary embodiment of the present invention;
FIG. 2 is a view showing a Bluetooth device search screen according to the exemplary embodiment of the present invention; and
FIG. 3 is a flow chart for describing a method for Bluetooth communication according to the exemplary embodiment of the present invention.

### DETAILED DESCRIPTION OF THE PREFERRED EMBODIMENTS

Hereinafter, exemplary embodiments of the present invention will be described in more detail with reference to the accompanying drawings. In describing the exemplary embodiments of the present invention, a description of technical contents that are well-known in the art to which the present invention pertains and are not directly related to the present invention will be omitted if possible. The reason why an unnecessary description is omitted is to make the gist of the present invention clear.

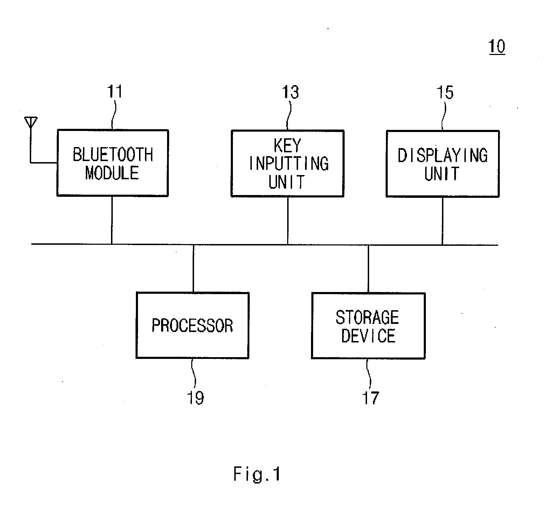

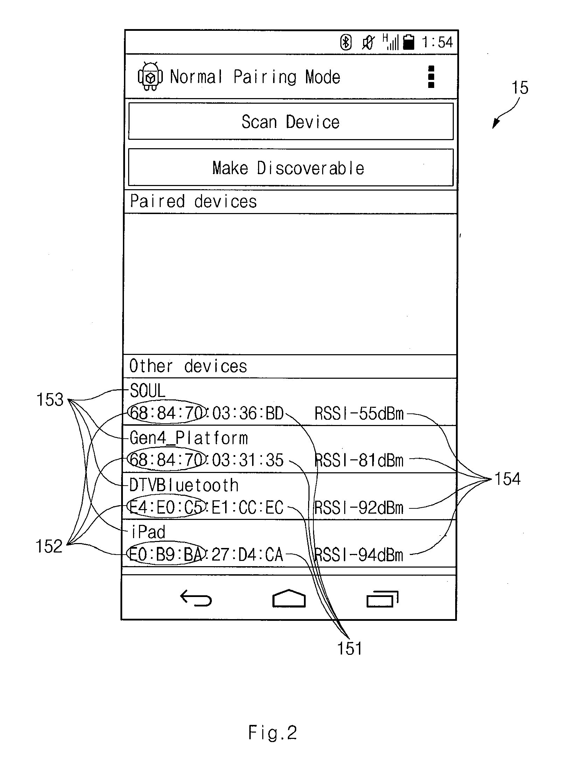

FIG. 1 is a block diagram showing main components of an apparatus having a Bluetooth module according to an exemplary embodiment of the present invention. FIG. 2 is a view showing a Bluetooth device search screen according to the exemplary embodiment of the present invention.

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, combustion, plug-in hybrid electric vehicles, hydrogen-powered vehicles, fuel cell vehicles, and other alternative fuel vehicles (e.g. fuels derived from resources other than petroleum).

Furthermore, the control logic of the present invention may be embodied as non-transitory computer readable media on a computer readable medium containing executable program instructions executed by a processor, controller or the like. Examples of the computer readable mediums include, but are not limited to, ROM, RAM, compact disc (CD)-ROMs, magnetic tapes, floppy disks, flash drives, smart cards and optical data storage devices. The computer readable recording medium can also be distributed in network coupled computer systems so that the computer readable media is stored and executed in a distributed fashion, e.g., by a telematics server or a Controller Area Network (CAN). Additionally, a storage device is configured to store algorithmic steps and a processor is specifically configured to execute said algorithmic steps to perform one or more processes which are described further below.

Referring to FIGS. 1 and 2, the apparatus 10 (hereinafter, referred to as a Bluetooth apparatus) having Bluetooth capabilities according to the exemplary embodiment of the present invention includes a Bluetooth module 11, a key inputting unit 13 (e.g., a keyboard either physical or virtual), a display 15, a storage device 17, and a processor 19. In addition, the Bluetooth apparatus 10, i.e., a portable terminal including therein the Bluetooth module, may be preferably applied to all information communication devices and multimedia devices such as a mobile terminal, a mobile phone, a wired and wireless phone, a portable multimedia player (PMP), a personal digital assistant (PDA), a smart phone, an MP3 player, and the like, and applications thereof..

The Bluetooth apparatus 10 includes the Bluetooth module 11 to perform Bluetooth communication with one or more other devices (not shown) capable of performing a Bluetooth communication. Here, other devices performing the Bluetooth communication with the Bluetooth apparatus 10 may include various kinds of devices such as a headset, a hands-free device, a portable terminal, a tablet personal computer (PC), a head unit integrated with a vehicle, and the like. In addition, in the exemplary embodiment of the present invention, the case in which the Bluetooth apparatus 10 performs the Bluetooth communication with other device in a state in which it is positioned in the vehicle will be described by way of example.

In a Bluetooth communication scheme, communication is performed in an industrial scientific medical (ISM) band of 2.4GHz. The ISM band has a feature that it may be freely used without a separate license. In the Bluetooth communication scheme, a guard band of 2MHz and a guard band of 3.5MHz are provided under and over the ISM band to prevent interference with other device. In the Bluetooth communication scheme, a frequency hopping scheme is basically used, and a frequency is hopped, for example, at 1600 times per second.

The Bluetooth module 1 performs a series of operations for transmitting and receiving a control signal and an audio signal to or from devices capable of performing the Bluetooth communication, for example, a headset, a hands-free device, a portable terminal, a tablet PC, a head unit positioned in a vehicle, or the like, through a wireless interface. Particularly, the Bluetooth module 11 receives the control signal transmitted from the device capable of performing the Bluetooth communication and provides the received control signal to the processor 19.

During operation, the Bluetooth module 11 receives unique information of devices including a received signal strength indication (RSSI) from the respective devices inquired by being operated. Here, the unique information includes an organization unique identifier (OUI) of a media access control (MAC address), a Bluetooth address (BD_ADDR), a kind of device, a name of device, and the like.

The key inputting unit 13 receives an operation signal from a user in order to control an operation of the Bluetooth apparatus 10. The key inputting unit 13 performs an operation such as a Bluetooth mode setting operation, or the like, according to the present exemplary embodiment.

The display 15 visually displays various information associated with a state and an operation of the Bluetooth apparatus 10. The display 15 displays information of the respective devices in a list form through responses from the corresponding devices at the time of searching for devices which are capable of performing the Bluetooth communication according to the exemplary embodiment of the present invention. This may be represented as shown in FIG. 2.

More specifically, a Bluetooth device search screen displayed on the display 15 will be described with reference to FIG. 2. A reference numeral 151 indicates MAC addresses of peripheral devices of the Bluetooth apparatus 10. The MAC address is configured of twelve figures of a hexadecimal number, and a reference numeral 152 corresponding to initial six figures of the MAC address indicates unique number allocated from IEEE to a company manufacturing a device using the OUI. Further, a reference numeral 153 indicates a name of a searched peripheral device, and a reference numeral 154 indicates an RSSI value of the search peripheral device.

The storage device 17, e.g., a memory or hard drive, stores a program and information required for the operation of the Bluetooth apparatus 10. The storage device 17 arranges and stores devices searched and confirmed through the Bluetooth module 11 according to the present embodiment and extracts, arranges, and stores only devices, which are products manufactured by the same manufacturer as that of the Bluetooth apparatus 10. The storage device 17 also may store a PIN code (PIN_CODE). Here, the PIN code may be a number preset in the Bluetooth apparatus 10, and may have a format such as "593570".

The processor 19 in the exemplary embodiment of the present invention controls general operations of the respective components of the Bluetooth apparatus 10. The processor 19 as such searches for devices that are capable of performing Bluetooth communication when the Bluetooth module 11 is operated and receives responses from the respective devices. In this case, the processor 19 may for example, obtain MAC addresses, names, and RSSIs of the respective devices through the Bluetooth module 11.

The processor 19 analyzes the OUI in the obtained MAC addresses of the devices to extract information of the devices manufactured by the same manufacturer as that of the Bluetooth apparatus 10 and stores the extracted information in the storage device 17/ Then the processor sequentially allocates priorities to the devices manufactured by the same manufacturer and the RSSI values, and displays a list of the searched devices on the display 15 as shown in FIG. 2. More specifically, SOUL may indicate a head unit, Gen4_Platform may indicate a headset, DTVBluetooth may indicate a digital television (TV) apparatus, and iPad may indicate a tablet apparatus. Referring to a reference numeral 152, it may be confirmed that SOUL and Gen4_Platform are devices manufactured by the same manufacturer since they have the same OUI and it may be configured that SOUL has a largest RSSI value. That is, it may be confirmed that when the OUI of the Bluetooth apparatus 10 is 68:84:70, devices corresponding to SOUL and Gen4_Platform are devices manufactured by the same manufacturer as that of the Bluetooth apparatus 10 and are devices positioned in the vehicle in which the Bluetooth apparatus 10 is positioned.

The processor 19 compares RSSI values of the devices, which are products manufactured by the same manufacturer as that of the Bluetooth apparatus 10, with each other and extracts the head unit corresponding to SOUL, which is a device having a largest RSSI value, as a device to be connected to the Bluetooth apparatus 10 by the Bluetooth communication. The processor 19 pairs with the extracted device and connects the Bluetooth communication with the corresponding device once the pairing is completed. In this case, the processor 19 provides the PIN code stored in the storage device 17 to the head unit through the Bluetooth module 11. When the PIN code is displayed on the head unit through the Bluetooth module 11, the processor 19 receives a pairing confirmation signal through the key inputting unit 13 to perform pairing with, e.g., the head unit.

As described above, according to the exemplary embodiment of the present invention, at the time of performing the pairing with specific devices by the Bluetooth communication, response times of the specific devices are decreased and a process of inputting the PIN code for the pairing is omitted, such that several input procedures are omitted and a connection completion time is decreased, thereby making it possible to improve convenience of the user.

In addition, generally, when RSSIs are measured by the Bluetooth apparatus 10 positioned in the vehicle, since the head unit integrated with the vehicle is a line-of-sight (LOS) and a head unit mounted in another vehicle is a non-line-of-sight (NLOS), an RSSI of the head unit mounted in the vehicle is measured to be the largest. Therefore, since OUIs of the devices capable of performing the Bluetooth communication that are searched by the Bluetooth apparatus 10 are confirmed to extract devices manufactured by the same manufacturer as that of the Bluetooth apparatus 10 and the Bluetooth communication with a device having the highest RSSI value among the devices manufactured by the same manufacturer as that of the Bluetooth apparatus 10 is performed, when the Bluetooth apparatus 10 is located in the vehicle, communication with the head unit among the devices in the vehicle may be performed much quicker than in conventional pair techniques. In addition, the OUI and the RSSI are confirmed to minimize a candidate group of the devices that may be connected to the Bluetooth apparatus 10, thereby making it possible to significantly improve convenience of connection of the Bluetooth communication.

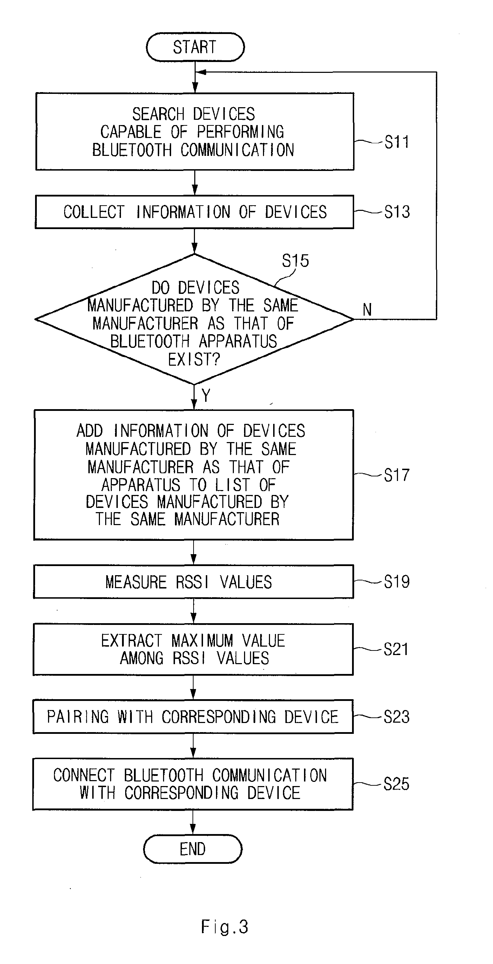

FIG. 3 is a flow chart for describing a method for Bluetooth communication according to the exemplary embodiment of the present invention. Referring to FIG. 3, in S11, the processor 19 controls the Bluetooth module 11 to search for peripheral devices disposed in or around the Bluetooth apparatus 10 and capable of performing the Bluetooth communication. In S 13, the processor 19 collects unique information of the peripheral devices capable of performing the Bluetooth communication. Here, the unique information of the peripheral device includes an organization unique identifier (OUI) of a media access control (MAC address), a Bluetooth address (BD_ADDR), a kind of device, a name of device, and the like.

In S 15, the processor 19 confirms the OUI of the MAC address among unique information collected in S 13 to confirm whether devices manufactured by the same manufacturer as that of the Bluetooth apparatus 10 among the searched peripheral devices are present.

When it is confirmed in S 15 that the devices manufactured by the same manufacturer as that of the Bluetooth apparatus 10 among the searched peripheral devices are not present, the processor 19 returns to S 11, and once it is confirmed in S 15 that the devices manufactured by the same manufacturer as that of the Bluetooth apparatus 10 among the searched peripheral devices are present, the processor 19 proceeds to S 17.

In S 17, the processor 19 adds information of the devices manufactured by the same manufacturer as that of the Bluetooth apparatus 10 to a list of the devices manufactured by the same manufacturer and stores the information in a storage device 17.

Then, in S 19, the processor 19 measures RSSI values of each of the peripheral devices among the unique information received from the Bluetooth module 11. In S21, the processor 19 extracts a device having a maximum value among the extracted RSSI values. In this case, the processor 19 extracts a device having the largest RSSI value among the devices manufacture by the same manufacturer as that of the Bluetooth apparatus 10.

In S23, the processor 19 controls the Bluetooth module 11 to request pairing with the extracted device and proceeds to S25 to connect Bluetooth communication with the device. In this case, in S23, it is preferable that the processor 19 transmits a PIN code, e.g., pre-stored in the storage device 17, to the extracted device and receives a connection signal through the key inputting unit 13 when the PIN code is displayed on the device, thereby connecting the Bluetooth communication with the device.

As described above, according to the exemplary embodiment of the present invention, while pairing with specific devices by the Bluetooth communication, response times of the specific devices are decreased and a process of inputting the PIN code for the pairing is omitted, such that several input procedures are omitted and a connection completion time is decreased, thereby making it possible to improve convenience of the user.

In addition, according to the exemplary embodiment of the present invention, the devices manufactured by the same manufactures as that of the apparatus having a Bluetooth module are searched and the pairing with the device having a largest RSSI value is performed based on the RSSI values of the searched devices to significantly decrease the number of searched devices, thereby making it possible to improve convenience of connection of the Bluetooth communication.

Hereinabove, the apparatus having a Bluetooth module and the method for Bluetooth communication thereof according to the exemplary embodiment of the present invention have been described. Although the exemplary embodiments of the present invention have been illustrated in the present specification and the accompanying drawings and specific terms have been used, they are used in a general meaning in order to assist in the understanding the present invention and do not limit the scope of the present invention. It will be obvious to those skilled in the art to which the present invention pertains that other modifications based on the spirit of the present invention may be made in addition to the above-mentioned exemplary embodiments.

### SYMBOL OF EACH OF THE ELEMENTS IN THE FIGURES

- 11:: BLUETOOTH MODULE
- 13:: KEY INPUTTING UNIT
- 15:: DISPLAYING UNIT
- 17:: STORING UNIT
- 19:: CONTROLLING UNIT
- S11:: SEARCH DEVICES CAPABLE OF PERFORMING BLUETOOTH COMMUNICATION
- S13:: COLLECT INFORMATION OF DEVICES
- S15:: DO DEVICES MANUFACTURED BY THE SAME MANUFACTURER AS THAT OF BLUETOOTH APPARATUS EXIST?
- S17:: ADD INFORMATION OF DEVICES MANUFACTURED BY THE SAME MANUFACTURER AS THAT OF APPARATUS TO LIST OF DEVICES MANUFACTURED BY THE SAME MANUFACTURER
- S19:: MEASURE RSSI VALUES
- S21:: EXTRACT MAXIMUM VALUE AMONG RSSI VALUES
- S23:: PAIRING WITH CORRESPONDING DEVICE
- S25:: CONNECT BLUETOOTH COMMUNICATION WITH CORRESPONDING DEVICE

## Claims

1. An apparatus positioned in a vehicle comprising:
a Bluetooth module configured to perform Bluetooth communication with one or more devices configured to perform the Bluetooth communication; and
a processor configured to obtain received signal strength indications (RSSIs) of the one or more devices; search for devices which are products manufactured by a same manufacturer as that of the apparatus and pair with a device of the one or more devices that has a largest RSSI among the obtained RSSIs to establish the Bluetooth communication.

2. The apparatus according to claim 1, wherein the processor is configured to confirm whether or not the devices are products manufactured by the same manufacturer as that of the apparatus using organization unique identifiers (OUIs) of media access control (MAC) addresses of the devices.

3. The apparatus according to claim 2, wherein the processor adds the devices that are the products manufactured by the same manufacturer as that of the apparatus to a list of devices manufactured by the same manufacturer.

4. The apparatus according to claim 3, further comprising a storage device that stores the list of the devices manufactured by the same manufacturer.

5. The apparatus according to claim 1, wherein one or more devices capable of performing the Bluetooth communication include a head unit integrated with the vehicle.

6. A Bluetooth communication method comprising:
searching, by an apparatus having a Bluetooth module, one or more devices capable of performing Bluetooth communication and located in a vehicle;
confirming, by a processor within the apparatus, whether the one or more devices are products manufactured by the same manufacturer as that of the apparatus;
obtaining, by the processor, receiving received signal strength indications (RSSIs) of the one or more devices; and
pairing, by the processor, with a device of the one or more devices having a largest RSSI among the obtained RSSIs to connect the Bluetooth communication.

7. The Bluetooth communication method according to claim 6, wherein confirming whether the devices are products manufactured by a same manufacturer as that of the apparatus includes determining whether the one or more devices are products manufactured by the same manufacturer as that of the apparatus is confirmed using organization unique identifiers (OUIs)of media access control (MAC) addresses.

8. The Bluetooth communication method according to claim 7, further comprising, upon confirming whether the devices are products manufactured by the same manufacturer as that of the apparatus, adding the devices that are the products manufactured by the same manufacturer as that of the apparatus to a list of devices manufactured by the same manufacturer and storing the list of the devices manufactured by the same manufacturer on a storage device.
